# EUROPÄISCHE PATENTSCHRIFT

(11) **EP 4 423 341 B1**
(45) Veröffentlichungstag und Bekanntmachung des Hinweises auf die Patenterteilung: **01.10.2025**
(21) Anmeldenummer: 22813394.8
(22) Anmeldetag: 27.10.2022
(51) Int. Cl.: E01C 1/00

(54) **FOLIENTUNNEL FÜR FAHRBAHNEN**
FILM TUNNEL FOR ROADWAYS
TUNNEL EN FEUILLES POUR VOIES DE CIRCULATION

(30) Priorität: 29.10.2021 AT 508602021
(43) Veröffentlichungstag der Anmeldung: 04.09.2024
(73) Patentinhaber: Energy Membrane GmbH, 9913 Abfaltersbach (AT)
(72) Erfinder: KRALER, Andreas, 9913 Abfaltersbach (AT); ROITHMAYR, Robert, 9900 Lienz (AT)
(74) Vertreter: Burger, Hannes
(86) Internationale Anmeldenummer: PCT/AT2022/060373
(87) Internationale Veröffentlichungsnummer: WO 2023/070143

(56) Entgegenhaltungen:
- EP-A1- 3 486 370
- CN-A- 107 386 137
- DE-A1- 102006 022 245
- DE-U1- 29 915 671

## Beschreibung

Die Erfindung betrifft einen Folientunnel zur Überdachung einer Fahrbahn, wobei der Folientunnel Träger aufweist, zwischen welchen zumindest eine Folie aufgespannt ist.

Ein Folientunnel der oben genannten Art ist beispielsweise aus der DE102006022245A1 bekannt geworden.

Bei bekannten Folientunnel ist es ein Problem, dass im Fall eines Unfalls eine barrierefreier Zugang zur Unfallstelle aus der Luft nicht gewährleistet werden kann. So sollte beispielsweise ermöglicht sein, dass ein Helikopter auf der Fahrbahn landen kann. Auch kann im Fall eines Brandes bei der bekannten Lösung ein Entlüften des Tunnels durch Öffnen der Tunnelwände nicht zuverlässig gewährleistet werden.

Es ist daher eine Aufgabe der Erfindung, im Falle einer Überdachung einer Fahrbahn, im Bedarfsfall einen einfaches Öffnen der Überdachung zu gewährleisten.

Diese Aufgabe wird mit einem Folientunnel der eingangs genannten Art erfindungsgemäß dadurch gelöst, dass die Träger eine erste Gruppe von Trägern und eine zweite Gruppe von Trägern umfassen, wobei die Träger der ersten Gruppe in Bezug auf eine Längsmittelebene des Folientunnels gemeinsam auf einer ersten Seite und die Träger der zweiten Gruppe in Bezug auf die Längsmittelebene des Folientunnels gemeinsam auf einer zweiten der ersten Seite gegenüberliegenden Seite angeordnet sind, wobei die Träger der ersten Gruppe mit den Trägern der zweiten Gruppe Paare von Trägern bilden, deren obere freie Enden in einem Abstand voneinander angeordnet und durch zumindest eine Haltevorrichtung miteinander verbunden sind, wobei jeder Träger zumindest der ersten Gruppe und/oder der zweiten Gruppe einen unteren und zumindest einen oberen Teil aufweist, wobei der zumindest eine obere Teil bei Lösen der Haltevorrichtung aufgrund seiner Gewichtskraft entlang des zumindest einen unteren Teils in Richtung eines unteren Endes des zumindest einen unteren Teils in eine untere Endposition geführt ist.

Die erfindungsgemäße Lösung ermöglicht es, im Bedarfsfall ein zuverlässiges Öffnen des Tunnels zu gewährleisten. Dadurch, dass eine Öffnungsbewegung der oberen Teile durch deren Eigengewicht bewirkt wird, wird auch eine hohe Ausfallssicherheit, beispielsweise in einem Brandfall, erreicht.

Als besonders vorteilhaft hat sich eine Variante der Erfindung erwiesen, bei der der zumindest eine untere Teil und der zumindest eine obere Teil bogenförmig ausgebildet sind.

Um möglichst gute Sichtverhältnisse in dem Tunnel zu schaffen und auch die Umgebung des Tunnels gut wahrnehmen zu können, kann es vorgesehen sein, dass die zumindest eine Folie in einen sichtbaren Spektralbereich einen Transmissionsgrad zwischen 0,80 und 0,99, insbesondere zwischen 0,9 und 0,95 in einem sichtbaren Spektralbereich aufweist.

Um die Bewegung der oberen Teile der Träger nach unten definiert zu begrenzen und auch ein ungehindertes Verlassen der Fahrbahn zu gewährleisten, kann es vorgesehen sein, dass an dem zumindest einen unteren Teil zumindest ein unterer, die untere Endposition des zumindest einen oberen Teils definierenden Anschlag angeordnet ist. Der untere Anschlag kann hierbei in einer Höhe angeordnet sein, der ein Betreten und Verlassen der Fahrbahn in seitlicher Richtung ermöglicht. Beispielsweise kann der untere Anschlag so angebracht sein, dass eine untere Kante des obere Teils 3 m über der Fahrbahn zu stehen kommt.

Um zusätzliche Funktionalitäten realisieren zu können, wie beispielsweise eine thermische Isolierung oder den Einbau zusätzlicher Elemente, beispielsweise zur Energiegewinnung und gleichzeitig ein ästhetisches Erscheinungsbild zu gewährleisten, kann es vorgesehen sein, dass zumindest zwischen zwei oberen Teilen von Trägern einer Gruppe zumindest zwei Folien gespannt sind, wobei eine der Folien eine äußere Verkleidung des Tunnels bildet und eine der Folien eine innere Verkleidung des Tunnels bildet, wobei zwischen der die äußere Verkleidung bildenden Folie und der die innere Verkleidung bildenden Folie ein Hohlraum gebildet ist.

Als besonders vorteilhaft hinsichtlich der Umwandlung von Sonnenenergie in elektrische Energie hat es sich erwiesen, dass an der die äußere Verkleidung bildenden Folie Solarpaneele angeordnet, insbesondere angeklebt und/oder durch Laminieren verbunden, sind. Vorteilhaft an dieses Ausführungsform ist besonders, dass ein Raum über Fahrbahnen sehr effizient für die Stromerzeugung verwendet werden kann. Mit nur sehr geringen Eingriffen in die Umwelt, lässt sich auf diese Weise eine große Fläche für eine Solarstromerzeugung realisieren.

Gemäß einer Variante der Erfindung, die einen optimalen Schutz und eine einfache Montage der Solarpaneele ermöglicht kann es vorgesehen sein, dass die Solarpaneele an einer dem Hohlraum zugewandten Seite der die äußere Verkleidung bildenden Folie angeordnet sind.

Darüber hinaus kann es vorgesehen sein, dass in dem Hohlraum zumindest eine Leitung für ein Wärme- und/oder Kältetransportmittel angeordnet ist. Auf diese Weise lässt sich zusätzlich und unabhängig von der Gewinnung von Solarstrom auch Wärme oder Kälte aus dem Tunnel abführen und andernorts für eine Heizung oder Kühlung verwenden.

Besonders bevorzugt kann es vorgesehen sein, dass in der zumindest einen Leitung ein Phasenwechselmaterial angeordnet ist. Durch die Verwendung eines Phasenwechselmaterials kann durch Wechsel des Aggregatzustandes, beispielsweise von einem flüssigen zu einem zum festen Aggregatzustand bzw. von einem gasförmigen zu einem flüssigen Zustand, thermische Energie abgegeben bzw. bei einem Übergang von einem festen zu einem flüssigen oder von einem flüssigen zu einem gasförmigen Aggregatzustand aufgenommen werden, ohne dass sich hierbei die Temperatur des Speichermaterials wesentlich ändert. Diese Eigenschaften machen Phasenwechselmaterialien für einen Transport von thermischer Energie aus dem Folientunnel zu einem Endverbraucher auch über große Strecken sehr gut geeignet.

Eine Erwärmung des Hohlraumes und somit ein Wirkungsgrad des Folientunnels lässt sich dadurch verbessern, dass der Hohlraum mit einem Treibhausgas, insbesondere CO₂ gefüllt ist.

Zum besseren Verständnis der Erfindung wird diese anhand der nachfolgenden Figuren näher erläutert.

Es zeigen jeweils in stark vereinfachter, schematischer Darstellung:
- Fig. 1: einen Querschnitt durch einen erfindungsgemäßen Folientunnel;
- Fig. 2: eine Seitenansicht des Folientunnels aus Fig.1 und
- Fig. 3: eine Draufsicht auf den Folientunnel aus Fig. 1.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Im Folgenden ist die Erfindung die figurenübergreifend beschrieben.

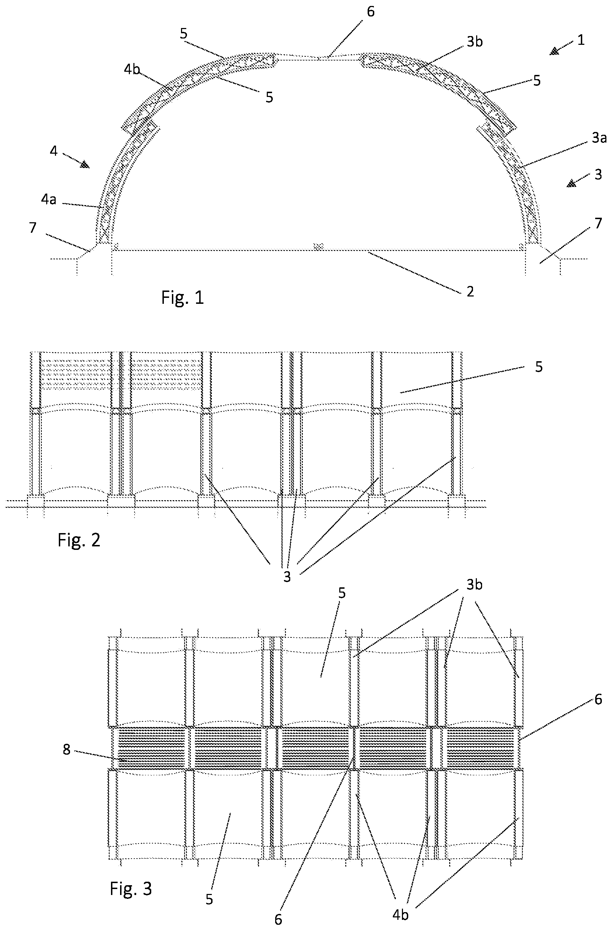

Gemäß Fig. 1 und 2 weist ein erfindungsgemäßer Folientunnel 1 zur Überdachung einer Fahrbahn 2 Träger 3, 4 auf.

Zwischen den Trägern 3 und Trägern 4 ist eine Folie 5 aufgespannt. Die Träger 3, 4 bilden eine erste Gruppe von Trägern 3 und eine zweite Gruppe von Trägern 4. Die Träger 3 der ersten Gruppe sind in Bezug auf eine Längsmittelebene des Folientunnels 1 auf einer ersten Seite und die Träger 4 der zweiten Gruppe in Bezug auf die Längsmittelebene des Folientunnels 1 auf einer zweiten der ersten Seite gegenüberliegenden Seite angeordnet. Hierbei ist es besonders bevorzugt, dass die Folie 5 zwischen benachbarten Trägern 3 bzw. zwischen zwei benachbarten Trägern 4 aufgespannt ist.

Die Träger 3 der ersten Gruppe mit den Trägern 4 der zweiten Gruppe Paare von Trägern 3, 4 bilden Paare, deren obere freie Enden in einem Abstand voneinander angeordnet und sind durch eine Haltevorrichtung 6 miteinander verbunden und gegeneinander gehalten. Die Haltevorrichtung 6 kann beispielsweise durch die Folie 5 oder durch ein Seil, eine Stange, eine Kette etc. ausgebildet sein. Bevorzugt ist die Haltevorrichtung 6 aus einem thermoplastischen Material, dass sich unter Hitzeeinfluss verformt und reißt, sodass in einem Brandfall die Haltevorrichtung zuverlässig gelöst wird. Alternativ kann die Haltevorrichtung 6 aber auch aus einem brandbeständigen Material gefertigt sein, in diesem Fall kann die Haltevorrichtung 6 an einem der beiden Träger 3, 4 mit einem Verschluss lösbare gehalten sein, während sie an dem anderen Träger bevorzugt nicht lösbar gelagert ist, sodass ein Herunterfallen der Haltevorrichtung 6 auf die Fahrbahn 2 verhindert werden kann, wenn die Verbindung zwischen den Trägern 3, 4 gelöst wird. Als lösbare Verschlüsse kommen alle Arten von kraft- und/oder formschlüssigen Verschlüssen in Frage. So kann beispielsweise ein Ende der Haltevorrichtung 6 zwischen lösbaren Backen geklemmt werden. Auch kann die Haltevorrichtung 6 eine Öse an ihrem Ende aufweisen, die mit einem bewegbarer Bolzen gesichert ist. Wenn ein Verschluss zum Einsatz kommt, so ist dieser bevorzugt an ein Überwachungssystem, beispielsweise ein Brandüberwachungssystem gekoppelt, um im Bedarfsfall automatisiert ausgelöst werden zu können. Auch eine manuelle Auslösung mittels Fernsteuerung des Verschlusses ist möglich.

Jeder Träger 3 der ersten Gruppe und/oder jeder Träger 4 der zweiten Gruppe weist einen unteren Teil 3a, 4a und einen oberen Teil 3b, 4b auf. Obwohl in der der dargestellten Ausführungsform alle Träger 3, 4 zweiteilig ausgebildet sind, kann es in der Praxis Situationen geben, in welchen nur die Träger 3 der ersten Gruppe oder nur die Träger 4 der zweiten Gruppe zweiteilig ausgebildet sein müssen. Wie aus Fig. 1 ersichtlich ist, können der untere Teil 3a, 4a und der obere Teil 3b, 4b bogenförmig ausgebildet sein, wobei jedoch auch andere Formen, beispielsweise lineare Ausbildungen der Teile 3a, 3b, 4a, 4b möglich sind. So könnten beispielsweise die unteren Teile 3a, 4a und die oberen Teile 3b, 4b leiterartig ausgebildet sein. Fig. 1 ist weiters zu entnehmen, dass die ein Tragwerk bildenden Teile 3a, 3b, 4a, 4b als Fachwerk ausgebildet sind. Um ein Herabfallen von Teilen, wie Schrauben, Bolzen und dergleichen, zu verhindern weisen das Fachwerk bzw. die Träger 3, 4 bevorzugt nur Schweiß- und Steckverbindungen auf. Aus Gewichtsgründen sind die Träger 3, 4 besonders bevorzugt aus einem Leichtbaumaterial, wie beispielsweise Aluminium, hergestellt.

Wie aus Fig. 3 zu entnehmen ist, sind die oberen Teile 3b, 4b der Träger 3 und 4 über die Haltevorrichtung 6 miteinander verbunden. Die Haltevorrichtung 6 ist durch die Gewichtskraft des oberen Teils bzw. der oberen Teile 3b, 4b vorgespannt. Der jeweilige obere Teil 3b, 4b wird bei Lösen der Haltevorrichtung 6 aufgrund seiner Gewichtskraft entlang des zugehörigen unteren Teils 3a, 4a in Richtung eines unteren Endes des einen unteren Teils 3a, 4a in eine untere Endposition geführt und der Folientunnel 1 geöffnet.

An dem unteren Teil 3a, 4a kann ein unterer, die untere Endposition des zugehörigen oberen Teils 3b, 4b definierender Anschlag ausgebildet sein. Auf Brücken kann der Anschlag so weit unten an dem ersten Teil 3a, 4a angeordnet sein, dass der obere Teil 3b, 4b beispielsweise über den Brückenrand abrutschen und eine völlig zugängliche Verkehrsfläche erzeugt werden (dabei werden die Bogen-Einheiten über den Brückenrand nach unten verstaut. Bei anderen Fahrbahnen kann der Anschlag in einer Höhe angebracht sein, z.B. 3 m, die ein ungehindertes Betreten bzw. Verlassen der Fahrbahn 2 ermöglicht. Um ein ungehindertes Betreten und Verlassen der Fahrbahn 2 zu ermöglichen, kann es vorgesehen sein, dass die Folie 5 nur im Bereich der oberen Teile 3b, 4b angeordnet ist und im Bereich der unteren Teile 3a, 3b keine Folie 5 vorhanden ist. Natürlich kann aber auch, abhängig vom Einsatzort, auch an den unteren Teilen grundsätzlich eine Folie 5 vorhanden sein. Dies kann insbesondere bei Brücken, auf welchen ein seitliches Verlassen der Fahrbahn 2 nicht möglich ist, der Fall sein.

Wenn der untere Teil 3a, 4a, keine Folie oder eine luftdurchlässige Folie 5 aufweist kann dort Luft in den Bereich der Fahrbahn 2 einströmen, die oben abgeführt werden kann. Hierzu kann der Folientunnel 1 im Bereich eines zwischen den oberen freien Enden der oberen Teile 3b, 4b der Träger 3, 4 einen teilweise oder vollständig geöffneten Bereich aufweisen. In der Darstellung in Fig. 3 ist dieser Bereich teilweise mit einer luftdurchlässigen Folie 8 abgedeckt. Die Luftdurchlässigkeit der Folie kann beispielsweise durch eine entsprechende Perforierung erzielt werden. Damit wird die Be- und Entlüftung sichergestellt. Sollte ein nicht mehr kontrollierbarer Zustand eintreffen (durch Unfall, Brand, Luftstaudruck) oder muss die Straßenfläche für Hubschrauber, Löscheinheiten von außen oder ähnliche Interventionen zugänglich gemacht werden so löst sich die Haltevorrichtung 6 und das Tragwerk rutscht nach unten ab. Das Lösen der Haltevorrichtung 6 kann entweder durch Brand- Rauchmelder, manuell durch Notauslösestellen (ähnlich wie in einem Zug ein roter Hebel), oder über Entfernung über Videoüberwachung und Fernsteuerung.

Darüber hinaus können Bereiche der Folie 5 an drei Seiten mit einem Schmelzdraht ausgerüstet sein, der, sobald er in Betrieb ist, eine Hitze von über >240 Grad C. erreicht und damit das Material der Folie, bevorzugt ETFE, schmelzen lässt. Damit bleibt die Folie 5 an der vierten (oberen) Kante hängen und ermöglicht so die Belüftung und Entrauchung der Fahrbahn 2.

Weiters können die Träger 3, 4 an einem unteren Ende auf einem Fundament 7, insbesondere einem Schrägfundament, ruhen. Das Fundament 7 ist bevorzugt breiter als die Träger 3, 4, beispielsweise als Streifenfundament, ausgeführt. Durch das Fundament 7 können die Träger 3, 4 geben horizontalen Verschub gesichert. Ebenso bildet die Breite des Fundaments 7 einen Schutz gegen Absinken des Tragwerks und auch gegen eine Einflussnahme von Vertikallasten gegenüber einem Straßenbelag (Schotterkoffer usw.). Ebenso ist ein breites Fundament 7 ein Vorteil, falls Einbauten wie Leitungen an der Straßenseite vorhanden sind. Das Fundament 7 kann zusätzlich durch Erd-Schraubfundamente gesichert werden. Die Schräge des Fundaments erschwert, dass jemand auf die Träger 3, 4 klettern kann oder Tiere auf die Fahrbahn 2 gelangen können.

Um für gute Lichtverhältnisse in dem Folientunnel zu sorgen, kann die Folie 5 in einem sichtbaren Spektralbereich einen Transmissionsgrad zwischen 0,80 und 0,99, insbesondere zwischen 0,9 und 0,95 in einem sichtbaren Spektralbereich aufweisen. Als Material für die Folie hat sich beispielsweise ETFE bewährt, wobei jedoch auch andere geeignete Werkstoffe , PTFE, PET etc., zum Einsatz kommen können.

Weiters kann es vorgesehen sein, dass zwischen zwei oberen Teilen 3b, 4b von Trägern 3, 4 einer Gruppe mindestens zwei Folien 5 gespannt sind, wobei eine der Folien 5 eine äußere Verkleidung des Folientunnels 1 bildet und eine der Folien 5 eine innere Verkleidung des Folientunnels 1 bildet. Zwischen der die äußere Verkleidung bildenden Folie 5 und der die innere Verkleidung bildenden Folie 5 ist ein Hohlraum gebildet. An der die äußere Verkleidung bildenden Folie 5 können Solarpaneele, welche auch als Photovoltaikpaneele bezeichnet werden, angeordnet sein. Die Solarpaneele, bei welchen es sich bevorzugt um flexible Solarpaneele handelt, können beispielsweise an der äußeren Folie 5 angeklebt und/oder mit dieser durch Laminieren verbunden sein. Besonders bevorzugt sind die Solarpaneele an einer dem Hohlraum zugewandten Seite der die äußere Verkleidung bildenden Folie angeordnet.

Das gesamte die Träger 3, 4 und die Folien 5 umfassende Tragwerk kann als Solar-Thermie-Kollektor dienen. Damit ist das Tragwerk zugleich ein offener Absorber der die Umgebungswärme durch Konvektion von Sonne, Wind, Abgasen und Umgebungstemperatur überträgt (dies gilt sowohl für Wärme und auch Kälte). Die große Oberfläche des Kollektors ermöglicht damit eine gute Leistung. Damit dient das Tragwerk selbst als eine direkte oder indirekte Primär-Wärmequelle, welche die Energie mittels eines oder mehrerer Wärmetauscher, beispielsweise Regenerationswärmetauscher im Parallelbetrieb, auf ein Wärmetransportmittel überträgt. Der Wärmetransportmittelkreislauf selbst kann beispielsweise als geschlossener Wasser-Glykol-Kreislauf gemacht werden oder auch ein Phasenwechselmaterial umfassen. Der Wärmetransportmittelkreislauf kann durch das Fundament 7 verlaufen, um die Wärmeenergie von dem Folientunnel 1 abzutransportieren. Auch kann im Bereich des Fundaments 7 ein Wärmetauscher angeordnet sein. Ebenso kann ein Kühlkreislauf mit dem Tragwerk bzw. dem Folientunnel 1 verbunden sein, in den eine spezielle Flüssigkeit eingefüllt werden die zur Erzeugung von Schnee geeignet ist. Die entsprechende Kühlenergie, welche durch das Nutzbarmachen des kalten Himmels gewonnen wird, kann durch Abkühlen der Flüssigkeit mittels eines Wärmetauschers erfolgen und dazu eingesetzt werden, um Schnee zu erzeugten. An dieser Stelle sie darauf hingewiesen, dass der Begriff Fahrbahn in dem vorliegenden Zusammenhang sich nicht nur auf Fahrbahnen für Kraftfahrzeuge bezieht, sondern auch Schipisten umfasst.

Weiters kann es vorgesehen sein, dass der Hohlraum mit einem Treibhausgas, insbesondere CO₂ gefüllt ist, um die Aufnahmefähigkeit des Folientunnels 1 als Kollektor zu erhöhen.

Zusätzlich zum Tragwerk selbst können auch Schlauchkollektoren oder lineare Kollektoren in das Tragwerk eingebracht werden welche keine statische (Tragwirkung) haben. So kann in dem Hohlraum mindestens eine Leitung für ein Wärme- und/oder Kältetransportmittel angeordnet sein. Natürlich können auch mehrere Leitungen in dem Hohlraum verlegt sein. Insbesondere kann auch in den Leitungen bzw. in der Leitung ein Phasenwechselmaterial angeordnet sein.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Folientunnel
- 2: Fahrbahn
- 3: Träger
- 3a: unterer Teil
- 3b: oberer Teil
- 4: Träger
- 4a: unterer Teil
- 4b: oberer Teil
- 5: Folie
- 6: Haltevorrichtung
- 7: Fundament
- 8: Folie

## Patentansprüche

1. Folientunnel (1) zur Überdachung einer Fahrbahn (2), wobei der Folientunnel (1) Träger (3, 4) aufweist, zwischen welchen zumindest eine Folie (5) aufgespannt ist, **dadurch gekennzeichnet, dass** die Träger (3, 4) eine erste Gruppe von Trägern (3) und eine zweite Gruppe von Trägern (4) umfassen, wobei die Träger (3) der ersten Gruppe in Bezug auf eine Längsmittelebene des Folientunnels (1) gemeinsam auf einer ersten Seite und die Träger (4) der zweiten Gruppe in Bezug auf die Längsmittelebene des Folientunnels (1) gemeinsam auf einer zweiten der ersten Seite gegenüberliegenden Seite angeordnet sind, wobei die Träger (3) der ersten Gruppe mit den Trägern (4) der zweiten Gruppe Paare von Trägern (3, 4) bilden, deren obere freie Enden in einem Abstand voneinander angeordnet und durch zumindest eine Haltevorrichtung (6) miteinander verbunden und gegeneinander gehalten sind, wobei jeder Träger (3, 4) zumindest der ersten Gruppe und/oder der zweiten Gruppe einen unteren Teil (3a, 4a) und zumindest einen oberen Teil (3b, 4b) aufweist, wobei der zumindest eine obere Teil (3b, 4b) bei Lösen der Haltevorrichtung (6) aufgrund seiner Gewichtskraft entlang des zumindest einen unteren Teils (3a, 4a) in Richtung eines unteren Endes des zumindest einen unteren Teils (3a, 4a) in eine untere Endposition geführt ist.

2. Folientunnel nach Anspruch 1, **dadurch gekennzeichnet, dass** der zumindest eine untere Teil (3a, 4a) und der zumindest eine obere Teil (3b, 4b) bogenförmig ausgebildet sind.

3. Folientunnel nach Anspruch 1 oder 2, **dadurch gekennzeichnet, dass** die zumindest eine Folie (5) in einen sichtbaren Spektralbereich einen Transmissionsgrad zwischen 0,80 und 0,99, insbesondere zwischen 0,9 und 0,95 in einem sichtbaren Spektralbereich aufweist.

4. Folientunnel nach einem der Ansprüche 1 bis 3, **dadurch gekennzeichnet, dass** an dem zumindest einen unteren Teil (3a, 4a) zumindest ein unterer, die untere Endposition des zumindest einen oberen Teils (3b, 4b) definierenden Anschlag angeordnet ist.

5. Folientunnel nach einem der Ansprüche 1 bis 4, **dadurch gekennzeichnet, dass** zumindest zwischen zwei oberen Teilen (3b, 4b) von Trägern einer Gruppe zumindest zwei Folien (5) gespannt sind, wobei eine der Folien (5) eine äußere Verkleidung des Folientunnels (1) bildet und eine der Folien (5) eine innere Verkleidung des Folientunnels (1) bildet, wobei zwischen der die äußere Verkleidung bildenden Folie (5) und der die innere Verkleidung bildenden Folie (5) ein Hohlraum gebildet ist.

6. Folientunnel nach Anspruch 5, **dadurch gekennzeichnet, dass** an der die äußere Verkleidung bildenden Folie (5) Solarpaneele angeordnet, insbesondere angeklebt und/oder durch Laminieren verbunden, sind.

7. Folientunnel nach Anspruch 6, **dadurch gekennzeichnet, dass** die Solarpaneele an einer dem Hohlraum zugewandten Seite der die äußere Verkleidung bildenden Folie (5) angeordnet sind.

8. Folientunnel nach einem der Ansprüche 5 bis 7, **dadurch gekennzeichnet, dass** in dem Hohlraum zumindest eine Leitung für ein Wärme- und/oder Kältetransportmittel angeordnet ist.

9. Folientunnel nach einem der Anspruch 8, **dadurch gekennzeichnet, dass** in der zumindest einen Leitung ein Phasenwechselmaterial angeordnet ist.

10. Folientunnel nach einem der Ansprüche 5 bis 9, **dadurch gekennzeichnet, dass** der Hohlraum mit einem Treibhausgas, insbesondere CO₂ gefüllt ist.

## Claims

1. A film tunnel (1) for forming a roof over a roadway (2), wherein the film tunnel (1) has supports (3, 4) between which at least one film (5) is stretched, **characterized in that** the supports (3, 4) comprise a first group of supports (3) and a second group of supports (4), wherein the supports (3) of the first group are all arranged on a first side with regard to a longitudinal center plane of the film tunnel (1) and the supports (4) of the second group are all arranged on a second side, opposite the first side, with regard to a longitudinal center plane of the film tunnel, wherein the supports (3) of the first group, together with the supports of the second group (4), form pairs of supports (3, 4), the upper free ends of which are arranged at a distance from one another and are connected and retained with respect to one another by means of at least one retaining device (6), wherein each support (3, 4) at least of the first group and/or the second group has a lower part (3a, 4a) and at least one upper part (3b, 4b), wherein, when the retaining device (6) is released, the at least one upper part (3b, 4b) is guided on account of its weight force along the at least one lower part (3a, 4a) in the direction of a lower end of the at least one lower part (3a, 4a) into a lower end position.

2. The film tunnel according to Claim 1, **characterized in that** the at least one lower part (3a, 4a) and the at least one upper part (3b, 4b) have an arched construction.

3. The film tunnel according to Claim 1 or 2, **characterized in that** the at least one film (5) has a transmittance in a visible spectral range of between 0.80 and 0.99, in particular between 0.9 and 0.95.

4. The film tunnel according to one of Claims 1 to 3, **characterized in that** at least one lower end stop which defines the end position of the at least one upper part (3b, 4b) is arranged on the at least one lower part (3a, 4a).

5. The film tunnel according to one of Claims 1 to 4, **characterized in that** at least between two upper parts (3b, 4b) of supports of a group, at least two films (5) are stretched, wherein one of the films (5) forms an outer cladding of the film tunnel (1) and one of the films (5) forms an inner cladding of the film tunnel (1), wherein a cavity is formed between the film (5) forming the outer cladding and the film (5) forming the inner cladding.

6. The film tunnel according to Claim 5, **characterized in that** solar panels are arranged, in particular adhered to and/or connected by lamination, on the film (5) forming the outer cladding.

7. The film tunnel according to Claim 6, **characterized in that** the solar panels are arranged on a side of the film (5) forming the outer cladding which is facing the cavity.

8. The film tunnel according to one of Claims 5 to 7, **characterized in that** at least one duct for a heat and/or cooling transfer medium is arranged in the cavity.

9. The film tunnel according to Claim 8, **characterized in that** a phase change material is arranged in the at least one duct.

10. The film tunnel according to one of Claims 5 to 9, **characterized in that** the cavity is filled with a greenhouse gas, in particular CO₂.

## Revendications

1. Serre-tunnel (1) destinée à recouvrir une chaussée (2), la serre-tunnel (1) présentant des supports (3, 4) entre lesquels est tendu au moins un film (5), **caractérisée en ce que** les supports (3, 4) comprennent un premier groupe de supports (3) et un deuxième groupe de supports (4), les supports (3) du premier groupe étant agencés ensemble sur un premier côté par rapport à un plan médian longitudinal de la serre-tunnel (1) et les supports (4) du deuxième groupe étant agencés ensemble sur un deuxième côté opposé au premier côté par rapport au plan médian longitudinal de la serre-tunnel (1), les supports (3) du premier groupe formant avec les supports (4) du deuxième groupe des paires de supports (3, 4) dont les extrémités libres supérieures sont espacées les unes des autres et sont reliées entre elles et maintenues les unes contre les autres par au moins un dispositif de retenue (6), chaque support (3, 4) au moins du premier groupe et/ou du deuxième groupe comprenant une partie inférieure (3a, 4a) et au moins une partie supérieure (3b, 4b), l'au moins une partie supérieure (3b, 4b) étant guidée, lors du desserrage du dispositif de retenue (6), sous l'effet de son poids le long de l'au moins une partie inférieure (3a, 4a) en direction d'une extrémité inférieure de l'au moins une partie inférieure (3a, 4a) dans une position d'extrémité inférieure.

2. Serre-tunnel selon la revendication 1, **caractérisée en ce que** l'au moins une partie inférieure (3a, 4a) et l'au moins une partie supérieure (3b, 4b) sont réalisées en forme d'arc.

3. Serre-tunnel selon la revendication 1 ou 2, **caractérisée en ce que** l'au moins un film (5) présente dans une plage spectrale visible un coefficient de transmission compris entre 0,80 et 0,99, en particulier entre 0,9 et 0,95 dans une plage spectrale visible.

4. Serre-tunnel selon l'une des revendications 1 à 3, **caractérisé en ce que** sur l'au moins une partie inférieure (3a, 4a), au moins une butée inférieure définissant la position d'extrémité inférieure de l'au moins une partie supérieure (3b, 4b) est agencée.

5. Serre-tunnel selon l'une des revendications 1 à 4, **caractérisée en ce qu'**au moins deux films (5) sont tendus entre au moins deux parties supérieures (3b, 4b) de supports d'un groupe, l'un des films (5) formant un revêtement extérieur de la serre-tunnel (1) et l'autre film (5) formant un revêtement intérieur de la serre-tunnel (1), un espace creux étant formé entre le film (5) formant le revêtement extérieur et le film (5) formant le revêtement intérieur.

6. Serre-tunnel selon la revendication 5, **caractérisée en ce que** des panneaux solaires sont agencés, en particulier collés et/ou reliés par laminage, sur le film (5) formant le revêtement extérieur.

7. Serre-tunnel selon la revendication 6, **caractérisée en ce que** les panneaux solaires sont agencés sur un côté du film (5) formant le revêtement extérieur tourné vers l'espace creux.

8. Serre-tunnel selon l'une des revendications 5 à 7, **caractérisée en ce qu'**au moins un conduit pour un moyen de transport de chaleur et/ou de froid est agencé dans la cavité.

9. Serre-tunnel selon l'une des revendications 8, **caractérisée en ce qu'**un matériau à changement de phase est agencé dans l'au moins une conduite.

10. Serre-tunnel selon l'une des revendications 5 à 9, **caractérisée en ce que** la cavité est remplie d'un gaz à effet de serre, en particulier de CO₂.
